# EUROPÄISCHE PATENTSCHRIFT

(11) **EP 2 957 026 B1**
(45) Veröffentlichungstag und Bekanntmachung des Hinweises auf die Patenterteilung: **29.08.2018**
(21) Anmeldenummer: 14700969.0
(22) Anmeldetag: 08.01.2014
(51) Int. Cl.: H02K 17/16, H02K 15/00

(54) **KURZSCHLUSSKÄFIG FÜR EINEN KURZSCHLUSSLÄUFER UND HERSTELLUNGSVERFAHREN DESSELBEN**
SQUIRREL CAGE FOR A SQUIRREL-CAGE ROTOR AND METHOD FOR THE PRODUCTION THEREOF
CAGE EN COURT-CIRCUIT POUR MOTEUR À ROTOR EN COURT-CIRCUIT ET PROCÉDÉ DE PRODUCTION CORRESPONDANT

(30) Priorität: 18.02.2013 DE 102013202557
(43) Veröffentlichungstag der Anmeldung: 23.12.2015
(73) Patentinhaber: Robert Bosch GmbH, 70442 Stuttgart (DE)
(72) Erfinder: REICHERT, Birgit, 38108 Braunschweig (DE); DILLMANN, Christian, 30823 Garbsen (DE); ZEADAN, Jeihad, B-4728 Kelmis (BE); GRAHLMANN, Ivo, 31135 Hildesheim (DE); MINNERMANN, Markus, 30559 Hannover (DE)
(86) Internationale Anmeldenummer: PCT/EP2014/050217
(87) Internationale Veröffentlichungsnummer: WO 2014/124760

(56) Entgegenhaltungen:
- DE-A1- 10 258 029
- US-A1- 2011 080 067

## Beschreibung

Die Erfindung betrifft einen Kurzschlusskäfig für einen Kurzschlussläufer und ein Verfahren zum Herstellen eines Kurzschlusskäfigs für einen Kurzschlussläufer.

### Stand der Technik

Als Kurzschlussläufer werden die Läufer bzw. Motoren von Asynchronmotoren bezeichnet, welche einen dauernd kurzgeschlossenen Käfig besitzen. Dabei wird eine Mehrzahl von Käfigstäben, welche in einer Umlaufrichtung des Käfigs angeordnet sind, mittels zweier Kurzschlussringe verbunden.

DE 195 42 962 C1 beschreibt einen Kurzschlussläufer für eine Asynchronmaschine und ein Verfahren zur Herstellung des Kurzschlussläufers. Die Kurzschlussringe des Käfigs bestehen jeweils aus Kupferblechen oder Kupferblech-Teilpaketen, welche voneinander beabstandet sind, so dass zwischen ihnen Kanäle zum Kühlen der Kurzschlussringe gebildet werden.

DE 102 58 029 A1 beschreibt einen Kurzschlussläufer für eine Asynchronmaschine mit Käfigstäben und Kurzschlussringen. Die Käfigstäbe sind mit den Kurzschlussringen durch einen Reibschweißverbindung verbunden. Im Endbereich der Käfigstäbe ist eine Kontaktschicht angeordnet, welche gemeinsam mit den Käfigstabenden mit den Kurzschlussringen verschweißt wird.

### Zusammenfassung der Erfindung

Mit der Erfindung werden ein Kurzschlusskäfig, welcher sich durch einen reduzierten elektrischen Übergangswiderstand zwischen den Käfigstäben und einem Kurzschlussring kennzeichnet, sowie ein Verfahren, welches eine vereinfachte Herstellung eines Kurzschlusskäfigs ermöglicht, bereitgestellt.

Es ist ein Kurzschlusskäfig für einen Kurzschlussläufer und ein Verfahren zum Herstellen eines Kurzschlusskäfigs gemäß den Merkmalen der unabhängigen Patentansprüche 1 und 7 angegeben. Weiterbildungen der Erfindung ergeben sich aus den abhängigen Ansprüchen und aus der folgenden Beschreibung.

Viele der im Folgenden im Hinblick auf den Stromschienenring beschriebenen Merkmale lassen sich auch als Verfahrensschritte implementieren und umgekehrt.

Gemäß einem ersten Aspekt ist ein Kurzschlusskäfig für einen Kurzschlussläufer angegeben. Der Kurzschlusskäfig weist eine Mehrzahl von Käfigstäben, welche in axialer Richtung des Kurzschlusskäfigs verlaufen, einen ersten Kurzschlussring und einen zweiten Kurzschlussring, wobei der erste Kurzschlussring und der zweite Kurzschlussring an in axialer Richtung gegenüberliegenden Enden der Mehrzahl von Käfigstäben angeordnet sind, auf. Der Kurzschlusskäfig weist zumindest am ersten oder am zweiten Kurzschlussring eine Verbindungsscheibe und eine Kurzschlussscheibe auf, wobei die Verbindungsscheibe eine Mehrzahl von Ausnehmungen aufweist, in denen jeweils ein Käfigstab angeordnet ist, so dass die Mehrzahl von Käfigstäben mit Bezug zu der Verbindungsscheibe mechanisch fixiert ist, wobei die Kurzschlussscheibe in axialer Richtung unmittelbar an der Verbindungsscheibe anliegt.

Damit weist ein Kurzschlussring einen sog. geteilten Aufbau auf und besteht aus der Verbindungsscheibe und aus der Kurzschlussscheibe. Die Verbindungsscheibe kann in einer Ausführungsform eine Materialdicke in axialer Richtung des Kurzschlusskäfigs zwischen 1 mm und 5 mm aufweisen. Die Kurzschlussscheibe kann eine Materialdicke zwischen 10 mm und 30 mm in axialer Richtung des Kurzschlusskäfigs aufweisen. Damit weist die Verbindungsscheibe eine niedrigere oder wesentlich niedrigere Materialdicke auf als die Kurzschlussscheibe.

Durch die geringere Materialdicke der Verbindungsscheibe kann diese beispielsweise mit einem reduzierten Bearbeitungsaufwand hergestellt werden. Ebenso kann das Herstellen einer mechanischen und elektrischen Verbindung und insbesondere stoffschlüssigen Verbindung zwischen den Käfigstäben und der Verbindungsscheibe durch die reduzierte Materialdicke vereinfacht werden. Um einen maximalen Strom- bzw. Elektronenfluss zwischen den Käfigstäben zu ermöglichen, weist ein Kurzschlussring zusätzlich zu der Verbindungsscheibe mit geringer Materialdicke eine Kurzschlussscheibe mit einer größeren Materialdicke auf. Dabei kann die Kurzschlussscheibe so mit der Verbindungsscheibe verbunden sein, dass diese beiden sich entlang einer Grundfläche flächig berühren. Die Kurzschlussscheibe und die Verbindungsscheibe können mit Bezug zueinander mechanisch fixiert sein und auch eine elektrische Verbindung zueinander aufweisen, wobei die elektrische Verbindung ebenfalls über die flächige Verbindung erfolgt.

Gemäß einer Ausführungsform sind die Ausnehmungen in der Verbindungsscheibe Durchbrüche in axialer Richtung der Verbindungsscheibe, wobei die Kurzschlussscheibe so an der Verbindungsscheibe anliegt, dass die Kurzschlussscheibe die Ausnehmungen überlappt.

Die Ausnehmungen können in ihrer Form und in ihrem Umfang bzw. Querschnitt insbesondere an Form und Umfang bzw. Querschnitt der Käfigstäbe angepasst sein, so dass die Käfigstäbe in den Ausnehmungen bzw. Durchbrüchen angeordnet sein können.

Die Kurzschlussscheibe wird in axialer Richtung des Kurzschlusskäfigs bzw. der Verbindungsscheibe an die Verbindungsscheibe angebracht bzw. liegt flächig an dieser an. In einer Ausführungsform ist die Kurzschlussscheibe frei von Durchbrüchen und/oder Ausnehmungen in axialer Richtung, so dass von der Kurzschlussscheibe die Durchbrüche in der Verbindungsscheibe überdeckt oder überlagert werden.

Die Käfigstäbe können so in den Durchbrüchen der Verbindungsscheibe angeordnet sein, dass ein Ende eines Käfigstabs bündig mit einer Oberfläche der Verbindungsscheibe abschließt, so dass, wenn die Kurzschlussscheibe auf der Verbindungsscheibe aufliegt, auch eine elektrische Verbindung zwischen den Käfigstäben und der Kurzschlussscheibe hergestellt wird.

Gemäß einer weiteren Ausführungsform sind die Käfigstäbe stoffschlüssig mit der Verbindungsscheibe verbunden.

Diese stoffschlüssige Verbindung ermöglicht insbesondere eine mechanische Verbindung mit hoher mechanischer Festigkeit sowie eine elektrische Verbindung zwischen den Käfigstäben und der Verbindungsscheibe mit einem geringen elektrischen Übergangswiderstand.

Gemäß einer weiteren Ausführungsform ist die Kurzschlussscheibe stoffschlüssig mit der Verbindungsscheibe verbunden.

Auch diese stoffschlüssige Verbindung zwischen der Kurzschlussscheibe und der Verbindungsscheibe dient der mechanischen Festigkeit sowie dem Bereitstellen eines geringen elektrischen Übergangswiderstandes zwischen der Verbindungsscheibe und der Kurzschlussscheibe.

Gemäß einer Ausführungsform ist die Kurzschlussscheibe stoffschlüssig mit einem Ende der Käfigstäbe verbunden. Dies kann erfordern, dass das entsprechende Ende der Käfigstäbe bündig mit einer Oberfläche der Verbindungsscheibe abschließt, so dass die Kurzschlussscheibe stoffschlüssig mit diesem Ende der Käfigstäbe verbunden werden kann.

Gemäß einer weiteren Ausführungsform weist zumindest ein Element der Kurzschlussscheibe und der Verbindungsscheibe Aluminium oder Kupfer oder eine Legierung hiervon auf.

Kupfer zeichnet sich durch eine vergleichsweise hohe elektrische Leitfähigkeit aus. Aluminium zeichnet sich durch ein vergleichsweise niedriges Gewicht und eine gute elektrische Leitfähigkeit aus. Durch die im Vergleich zum Aluminium höhere elektrische Leitfähigkeit von Kupfer kann ein Kurzschlusskäfig für einen Kurzschlussläufer, der aus Kupfer gefertigt ist, bei gleicher Leistung mit einem geringeren Volumen bereitgestellt werden. Somit kann hinsichtlich der bereitgestellten Leistung ein zur Verfügung stehender Bauraum für einen Kurzschlusskäfig bzw. Kurzschlussläufer optimal ausgenutzt werden, wenn Kupfer als Baumaterial verwendet wird. Im Gegensatz zu Kupfer kann bei Verwendung von Aluminium das Gewicht des Kurzschlusskäfigs reduziert werden.

Gemäß einer weiteren Ausführungsform weisen die Kurzschlussscheibe und die Verbindungsscheibe die gleiche Stoffzusammensetzung auf.

In anderen Worten bestehen also die Kurzschlussscheibe und die Verbindungsscheibe aus dem gleichen Material.

Gemäß einer weiteren Ausführungsform ist die stoffschlüssige Verbindung zwischen den Käfigstäben und der Verbindungsscheibe mittels einer Schweißverbindung und die stoffschlüssige Verbindung zwischen der Verbindungsscheibe und der Kurzschlussscheibe mittels einer Lötverbindung hergestellt.

Die Schweißverbindung kann dabei mit oder ohne Zusatz von Schweißmaterial erfolgen. Im Falle des Zusatzes von Schweißmaterial kann insbesondere die Schmelztemperatur des zugesetzten Materials höher sein als die Schmelztemperatur der zu verbindenden Materialien, d. h. der Käfigstäbe und der Verbindungsscheibe.

Die Lötverbindung zwischen der Kurzschlussscheibe und der Verbindungsscheibe erfolgt unter Zusatz eines Lötmaterials, wobei die Schmelztemperatur des Lötmaterials niedriger ist als die Schmelztemperatur der zu verbindenden Materialien, d. h. der Kurzschlussscheibe und der Verbindungsscheibe.

Gemäß einem weiteren Aspekt ist ein Verfahren zum Herstellen eines Kurzschlusskäfigs für einen Kurzschlussläufer angegeben, wobei das Verfahren die folgenden Schritte aufweist: Anfertigen einer Mehrzahl von Ausnehmungen in einer Verbindungsscheibe in einem ersten Schritt, Anbringen der Verbindungsscheibe an dem Kurzschlusskäfig, so dass jeweils ein Käfigstab einer Mehrzahl von Käfigstäben in einer Ausnehmung der Mehrzahl von Ausnehmungen angeordnet ist und Verbinden der Verbindungsscheibe mit der Mehrzahl von Käfigstäben mittels einer Schweißverbindung in einem zweiten Schritt, Aufsetzen einer Kurzschlussscheibe auf die Verbindungsscheibe in einem dritten Schritt, Verbinden der Kurzschlussscheibe mit der Verbindungsscheibe mittels einer Lötverbindung in einem vierten Schritt.

Die Anbindung der Käfigstäbe an die Kurzschlussringe bzw. Verbindungs- und Kurzschlussscheibe kann beim Herstellen eines Kurzschlussläufers und insbesondere eines Kurzschlusskäfigs eine große Herausforderung darstellen. Hierbei werden die Käfigstäbe sowohl mechanisch als auch elektrisch mit den Kurzschlussringen verbunden. Die Verbindung zwischen den Käfigstäben und den Kurzschlussringen sollte einen möglichst geringen elektrischen Übergangswiderstand aufweisen. Gleichzeitig sollte der Kurzschlussring nicht unterbrochen werden bzw. möglichst geringe Übergangswiderstände in Umfangsrichtung aufweisen. Der Kurzschlusskäfig und das Verfahren zum Herstellen eines Kurzschlusskäfigs wie oben und im Folgenden beschrieben können die dargestellten Anforderungen durch einen geteilten Aufbau der Kurzschlussringe, d. h., dass ein Kurzschlussring eine Verbindungsscheibe und eine Kurzschlussscheibe aufweist, erfüllen.

Die Käfigstäbe können beispielsweise per Laserschweißen, Plasmaschweißen oder einer anderen Schweißtechnik mit einer Verbindungsscheibe stoffschlüssig verbunden werden, so dass eine möglichst widerstandsarme elektrische Verbindung mit geringen elektrischen Verlusten zwischen den Käfigstäben und der Verbindungsscheibe hergestellt wird. Um zusätzlich eine möglichst widerstandsarme elektrische Verbindung der Verbindungsscheibe mit der Kurzschlussscheibe zu ermöglichen, werden diese beiden in einem aneinanderliegenden Zustand flächig oder sogar vollflächig an den benachbarten Flächen miteinander stoffschlüssig verbunden, beispielsweise per Löten, flächigem Löten, Hartlöten, Reibschweißen, Kondensatorentladungsschweißen oder mit einer zwischen ihnen angeordneten Lötfolie.

Dadurch, dass die Verbindungsscheibe mit einer Materialdicke von bis zu 5 mm deutlich dünner ist als die Kurzschlussscheibe mit einer Materialdicke von bis zu 20 mm oder 30 mm, können die Ausnehmungen und Durchbrüche in der Verbindungsscheibe einfach, schnell und günstig beispielsweise durch Stanzen hergestellt werden. Die Kurzschlussscheibe ist dann durchbruchsfrei und erfordert keine weitere Behandlung bzw. Bearbeitung bezüglich der Anbringung der Käfigstäbe.

Die Materialdicke der Verbindungsscheibe kann beispielsweise so bemessen sein, dass eine Schweißverbindung zwischen einem in einem Durchbruch befindlichen Käfigstab und der Verbindungsscheibe über die gesamte Dicke der Verbindungsscheibe erfolgen kann. Dabei kann berücksichtigt werden, dass in Abhängigkeit der Schweißtechnik und des verwendeten Schweißwerkzeugs eine unterschiedliche Eindringtiefe der Schweißverbindung gemessen von der Materialoberfläche hinein in das Materialinnere erfolgen kann.

Gemäß einer Ausführungsform werden die Ausnehmungen im ersten Schritt durch Stanzen angefertigt.

Gemäß einer weiteren Ausführungsform wird die Kurzschlussscheibe im dritten Schritt so auf die Verbindungsscheibe aufgesetzt, dass die Verbindungsscheibe in einer axialen Richtung des Kurzschlusskäfigs von der Kurzschlussscheibe vollständig überlappt wird.

Die Kurzschlussscheibe und die Verbindungsscheibe können einen ähnlichen Querschnitt und übereinstimmende Maße aufweisen, so dass die Kurzschlussscheibe mit der Verbindungsscheibe bündig abschließen, d. h., dass keine dieser beiden in einer Richtung quer zu der axialen Richtung des Kurzschlusskäfigs die andere überlappt, und insbesondere nicht seitlich darüber heraustritt. Die Kurzschlussscheibe überdeckt damit sowohl die Verbindungsscheibe als auch deren Ausnehmungen und Durchbrüche sowie die darin angeordneten Käfigstäbe.

Gemäß einer weiteren Ausführungsform wird die stoffschlüssige Verbindung zwischen der Kurzschlussscheibe und der Verbindungsscheibe mittels einer Lötfolie hergestellt, die zwischen der Kurzschlussscheibe und der Verbindungsscheibe angeordnet wird.

Damit wird das Herstellen einer vollflächigen stoffschlüssigen Verbindung zwischen der Verbindungsscheibe und der Kurzschlussscheibe ermöglicht.

Im Folgenden werden mit Verweis auf die Figuren Ausführungsbeispiele der Erfindung beschrieben.

### Kurze Beschreibung der Zeichnungen

Fig. 1 zeigt eine schematische Darstellung eines Kurzschlusskäfigs gemäß einem Ausführungsbeispiel.
Fig. 2 zeigt eine schematische Darstellung eines Kurzschlusskäfigs gemäß einem weiteren Ausführungsbeispiel.
Fig. 3 zeigt eine schematische Darstellung eines Kurzschlusskäfigs gemäß einem weiteren Ausführungsbeispiel.
Fig. 4 zeigt eine schematische Darstellung eines Kurzschlusskäfigs gemäß einem weiteren Ausführungsbeispiel.
Fig. 5 zeigt eine schematische Darstellung eines Kurzschlusskäfigs gemäß einem weiteren Ausführungsbeispiel.
Fig. 6A zeigt eine schematische Darstellung einer Verbindungsscheibe für einen Kurzschlusskäfig gemäß einem weiteren Ausführungsbeispiel.
Fig. 6B zeigt eine schematische Darstellung einer Kurzschlussscheibe für einen Kurzschlusskäfig gemäß einem weiteren Ausführungsbeispiel.
Fig. 7 zeigt eine schematische Darstellung der Verfahrensschritte eines Verfahrens gemäß einem Ausführungsbeispiel.

Die Darstellungen in den Figuren sind schematisch und nicht maßstabsgetreu. Werden in der folgenden Figurenbeschreibung gleiche Bezugsziffern verwendet, so betreffen diese gleiche oder ähnliche Elemente.

### Ausführungsformen der Erfindung

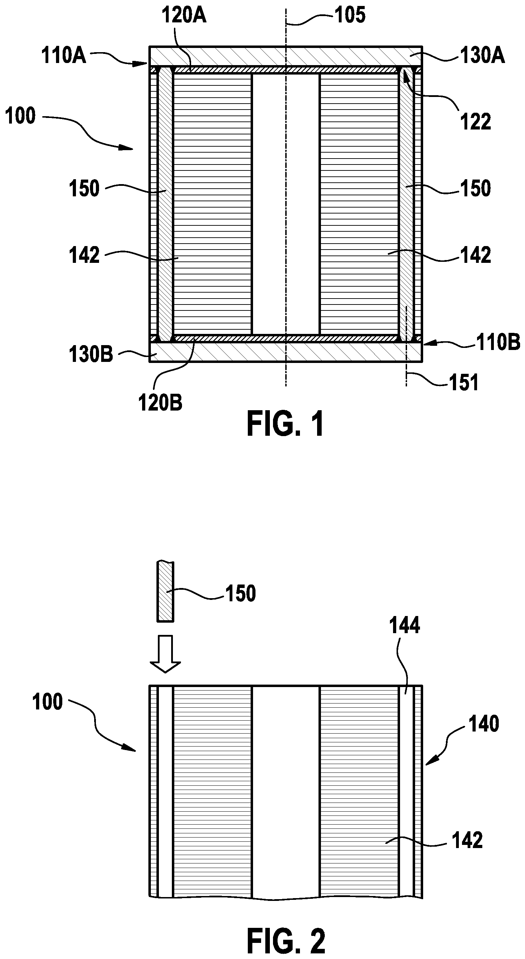

Fig. 1 zeigt einen Kurzschlussläufer mit einem Kurzschlusskäfig 100 und mit einem Lamellenpaket 140, wobei der Kurzschlusskäfig einen ersten Kurzschlussring 110A und einen zweiten Kurzschlussring 110B aufweist. Beide Kurzschlussringe weisen jeweils eine Verbindungsscheibe 120A, 120B und eine Kurzschlussscheibe 130A, 130B auf. Die Kurzschlussringe 110A, 110B sind in axialer Richtung des Kurzschlusskäfigs 100 entlang der Längsachse 105 gegenüberliegend angeordnet.

Der Kurzschlussläufer weist eine Mehrzahl von Lamellen 142 und eine Mehrzahl von Käfigstäben 150 auf. Eine Längsachse 151 der Käfigstäbe erstreckt sich in einer Richtung der Längsachse 105 des Kurzschlusskäfigs, wobei die Käfigstäbe 150 jeweils mit einem Ende in Ausnehmungen 122 der Verbindungsscheiben 120A, 120B der gegenüberliegenden Kurzschlussringe 110A, 110B angeordnet sind.

Ein Kupferstab kann beispielsweise zylinderförmig ausgeführt sein und einen Durchmesser zwischen 1 und 2 mm, beispielsweise 1,6 mm aufweisen. Der Kurzschlusskäfig kann beispielsweise zwischen 40 und 150 Käfigstäbe aufweisen, wobei der Kurzschlusskäfig beispielsweise einen Durchmesser zwischen 70 und 400 mm haben kann. Die angegebenen beispielhaften Maße können selbstverständlich auch von den angegebenen Wertebereichen sowohl nach oben als auch nach unten abweichen.

Fig. 2 zeigt eine schematische Darstellung eines Kurzschlusskäfigs 100 mit einem Lamellenpaket 140, welches eine Mehrzahl von Lamellen 142 aufweist, wobei sich zwischen den Lamellen eine Aufnahme 144 für einen Käfigstab 150 befindet. Der Käfigstab 150 wird in einer Längsrichtung der Aufnahme 144 in diese eingeführt, d. h. der Käfigstab 150 wird entlang seiner eigenen Längsachse bewegt, um in die Aufnahme 144 eingeführt zu werden.

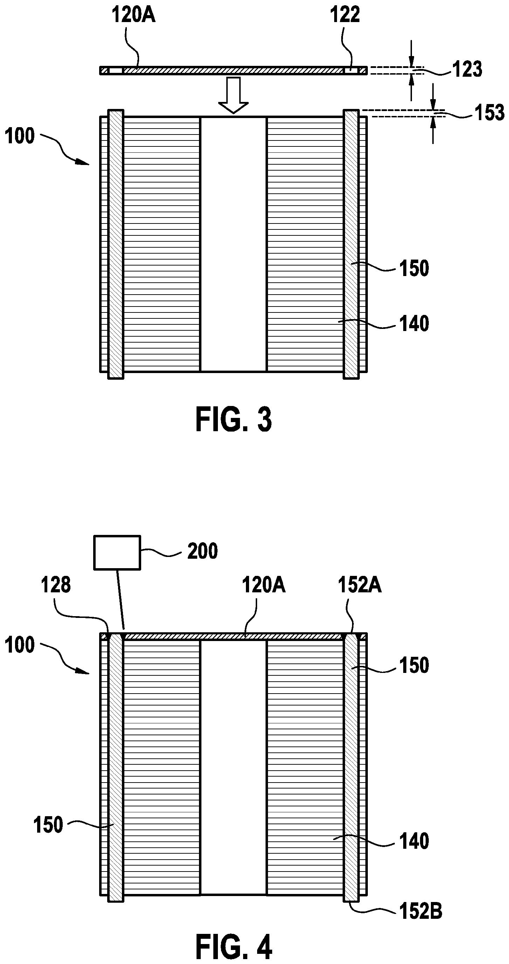

Fig. 3 zeigt einen Kurzschlusskäfig 100, an dessen Käfigstäbe 150 die Verbindungsscheibe 120A angebracht wird. Die Verbindungsscheibe 120A wird dabei so entlang der Längsachse des Kurzschlusskäfigs bewegt, dass die Käfigstäbe 150 jeweils in einer Ausnehmung 122 der Verbindungsscheibe 120A angeordnet werden.

Bevor die Verbindungsscheibe 120A mit den Käfigstäben mechanisch gekoppelt wird, weisen die Käfigstäbe 150 einen in Längsrichtung des Lamellenpakets überstehenden Abschnitt 153 auf. Dieser überstehende Abschnitt 153 kann insbesondere einer Materialdicke 123 der Verbindungsscheibe 120A in axialer Richtung des Kurzschlusskäfigs entsprechen, so dass ein Ende des Käfigstabs nach dem Aufsetzen der Verbindungsscheibe 120A bündig mit der dem Lamellenpaket abgewandten Oberfläche der Verbindungsscheibe 120A abschließt.

Fig. 4 zeigt eine schematische Darstellung des Verbindungsvorganges der Käfigstäbe 150 des Kurzschlusskäfigs 100 mit der ersten Verbindungsscheibe 120A. Das erste Ende 152A der Käfigstäbe 150 schließt bündig mit der dem Lamellenpaket 140 abgewandten Oberfläche der ersten Verbindungsscheibe 120A ab. Eine Schweißvorrichtung 200 kann damit eine stoffschlüssige Verbindung ausgehend von der dem Lamellenpaket abgewandten Seite der Verbindungsscheibe 120A zwischen der Verbindungsscheibe und jedem Käfigstab 150 herstellen. Die stoffschlüssige Verbindung 128 zwischen dem Käfigstab und der Verbindungsscheibe kann dabei insbesondere über die gesamte Materialdicke der Verbindungsscheibe 120A hergestellt werden, so dass ein elektrischer Übergangswiderstand zwischen den Käfigstäben und der Verbindungsscheibe minimiert wird.

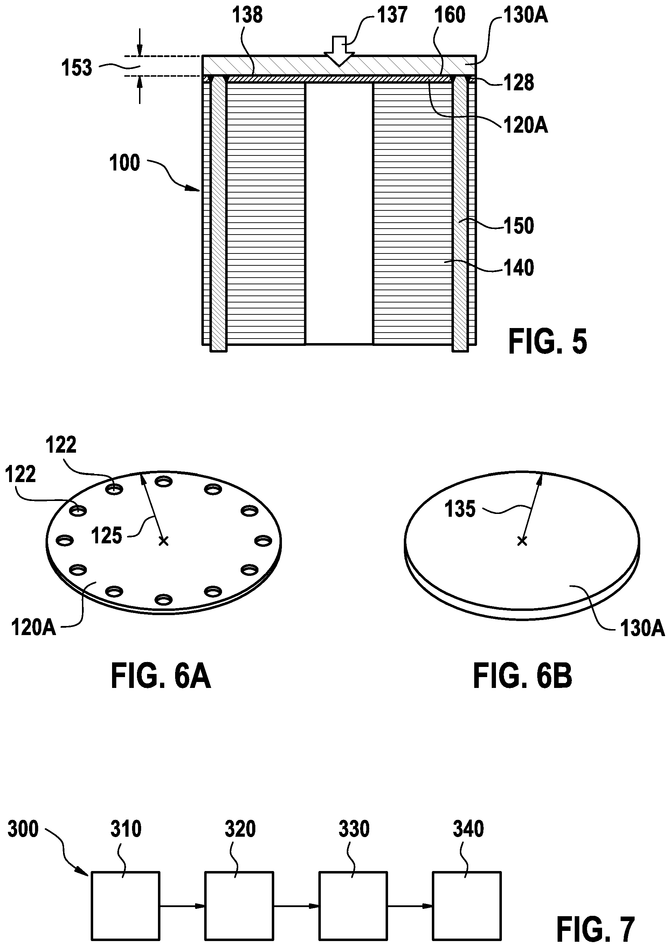

Fig. 5 zeigt einen Kurzschlusskäfig 100, wobei auf der ersten Verbindungsscheibe 120A, welche mit den Käfigstäben 150 mittels der stoffschlüssigen Verbindung 128 verbunden ist, die Kurzschlussscheibe 130A angeordnet ist. Die Kurzschlussscheibe 130A ist entlang der Anbringrichtung 137 auf die Verbindungsscheibe 120A so angebracht worden, dass gegenüberliegende bzw. aneinander angrenzende Oberflächen der Verbindungsscheibe 120A und der Kurzschlussscheibe 130A aneinander anliegen, so dass zwischen ihnen eine stoffschlüssige Verbindung 138, beispielsweise mittels der dazwischen angeordneten Lötfolie 160, hergestellt werden kann. Die Lötfolie 160 kann insbesondere eine vollflächige stoffschlüssige Verbindung zwischen der Verbindungsscheibe, dem entsprechenden Ende der Käfigstäbe sowie der Kurzschlussscheibe herstellen.

Figuren 2 bis 5 zeigen einen Kurzschlusskäfig in den einzelnen Prozessschritten zur Herstellung des Kurzschlusskäfigs, wobei die Prozessschritte in einem Beispiel in der Fig. 7 schematisch dargestellt und beschrieben werden.

Fig. 6A zeigt eine schematische Darstellung einer Verbindungsscheibe 120A. Die Verbindungsscheibe 120A ist kreisförmig ausgeführt und weist in Umfangsrichtung eine Mehrzahl von Durchbrüchen 122 auf. Die Durchbrüche 122 können insbesondere in gleichem Abstand zueinander angeordnet sein. Die kreisförmige Verbindungsscheibe 120A weist einen Radius 125 auf.

Fig. 6B zeigt eine schematische Darstellung einer Kurzschlussscheibe 130A, welche analog zu der in Fig. 6A dargestellten Verbindungsscheibe ebenfalls kreisförmig mit dem Radius 135 ausgeführt ist.

Die Kurzschlussscheibe 130 ist bis auf einen nicht dargestellten Durchbruch für eine mit dem Kurzschlussläufer mechanisch gekoppelte Welle ausnehmungs- bzw. durchbruchsfrei und weist somit im Gegensatz zu der Verbindungsscheibe keine Ausnehmungen oder Durchbrüche zum Aufnehmen der Käfigstäbe auf. Ebenso kann die in Fig. 6A gezeigte Verbindungsscheibe 120A einen Durchbruch für die mit dem Kurzschlussläufer gekoppelte Welle aufweisen, welche sich in axialer Richtung des Kurzschlusskäfigs erstreckt. In einem Ausführungsbeispiel ist der Radius 125 der Verbindungsscheibe 120A identisch mit dem Radius 135 der Kurzschlussscheibe 130A.

Fig. 7 zeigt eine schematische Darstellung der Verfahrensschritte eines Verfahrens 300 zum Herstellen eines Kurzschlusskäfigs wie oben und im Folgenden beschrieben.

In einem ersten Schritt 310 erfolgt das Anfertigen einer Mehrzahl von Ausnehmungen in einer Verbindungsscheibe. In einem zweiten Schritt 320 wird die Verbindungsscheibe so an dem Kurzschlusskäfig angebracht, dass jeweils ein Käfigstab einer Mehrzahl von Käfigstäben in einer Ausnehmung der Mehrzahl von Ausnehmungen angeordnet ist; weiterhin werden in dem zweiten Schritt die Verbindungsscheibe mit der Mehrzahl von Käfigstäben mittels einer Schweißverbindung stoffschlüssig verbunden.

In einem dritten Schritt 330 erfolgt das Aufsetzen einer Kurzschlussscheibe auf die Verbindungsscheibe.

In einem vierten Schritt 340 erfolgt das Verbinden der Kurzschlussscheibe mit der Verbindungsscheibe mittels einer Lötverbindung.

Der zweite Schritt 320 wird in Fig. 3 schematisch darstellt. Der Teilschritt des Verbindens der Verbindungsscheibe mit den Käfigstäben wird in Fig. 4 dargestellt. Der dritte Schritt 330 sowie der vierte Schritt 340 werden in Fig. 5 dargestellt.

Auch wenn die Figuren 2 bis 5 lediglich das Anbringen eines Kurzschlussrings sowie seiner Bestandteile Verbindungsscheibe und Kurzschlussscheibe dargestellen, können die in diesen Figuren dargestellten Verfahrensschritte in analoger Weise auch auf den zweiten Kurzschlussring angewandt werden.

## Patentansprüche

1. Kurzschlusskäfig (100) für einen Kurzschlussläufer, der Kurzschlusskäfig aufweisend:
eine Mehrzahl von Käfigstäben (150), welche in axialer Richtung (105) des Kurzschlusskäfigs verlaufen;
einen ersten Kurzschlussring (110A) und einen zweiten Kurzschlussring (110B);
wobei der erste Kurzschlussring (110A) und der zweite Kurzschlussring (110B) an in axialer Richtung gegenüberliegenden Enden (152A, 152B) der Mehrzahl von Käfigstäben (150) angeordnet sind; wobei zumindest einer des ersten Kurzschlussrings (110A) und des zweiten Kurzschlussrings (110B) eine Verbindungsscheibe (120A, 120B) und eine Kurzschlussscheibe (130A, 130B) aufweist;
wobei die Verbindungsscheibe (120A, 120B) eine Mehrzahl von Ausnehmungen (122) aufweist, in denen jeweils ein Käfigstab (150) angeordnet ist, so dass die Mehrzahl von Käfigstäben mit Bezug zu der Verbindungsscheibe (120A, 120B) mechanisch fixiert ist; und
wobei die Kurzschlussscheibe (130A, 130B) in axialer Richtung (105) unmittelbar an der Verbindungsscheibe (120A, 120B) anliegt,
**dadurch gekennzeichnet, dass**
die stoffschlüssige Verbindung (128) zwischen den Käfigstäben (150) und der Verbindungsscheibe (120A, 120B) mittels einer Schweißverbindung hergestellt ist und dass die stoffschlüssige Verbindung (138) zwischen der Verbindungsscheibe (120A, 120B) und der Kurzschlussscheibe (130A, 130B) mittels einer Lötverbindung hergestellt ist.

2. Kurzschlusskäfig (100) nach Anspruch 1,
wobei die Ausnehmungen (122) Durchbrüche in axialer Richtung (105) der Verbindungsscheibe sind; und
wobei die Kurzschlussscheibe (130A, 130B) so an der Verbindungsscheibe anliegt, dass die Kurzschlussscheibe (130A, 130B) die Ausnehmungen (122) überlappt.

3. Kurzschlusskäfig nach einem der Ansprüche 1 oder 2,
wobei die Käfigstäbe (150) stoffschlüssig mit der Verbindungsscheibe (120A, 120B) verbunden sind.

4. Kurzschlusskäfig nach einem der vorhergehenden Ansprüche,
wobei die Kurzschlussscheibe (130A, 130B) stoffschlüssig mit der Verbindungsscheibe (120A, 120B) verbunden ist.

5. Kurzschlusskäfig nach einem der vorhergehenden Ansprüche,
wobei zumindest ein Element der Kurzschlussscheibe (130A, 130B) und der Verbindungsscheibe (120A, 120B) Aluminium oder Kupfer oder eine Legierung hiervon aufweist.

6. Kurzschlusskäfig nach einem der vorhergehenden Ansprüche,
wobei die Kurzschlussscheibe (130A, 130B) und die Verbindungsscheibe (120A, 120B) die gleiche Stoffzusammensetzung aufweisen.

7. Verfahren (300) zum Herstellen eines Kurzschlusskäfigs (100) für einen Kurzschlussläufer, das Verfahren aufweisend die folgenden Schritte:
Anfertigen einer Mehrzahl von Ausnehmungen (122) in einer Verbindungsscheibe (120A, 120B) in einem ersten Schritt (310);
Anbringen der Verbindungsscheibe (120A, 120B) an dem Kurzschlusskäfig (100), so dass jeweils ein Käfigstab (150) einer Mehrzahl von Käfigstäben (150) in einer Ausnehmung (122) der Mehrzahl von Ausnehmungen (122) angeordnet ist und Verbinden der Verbindungsscheibe (120A, 120B) mit der Mehrzahl von Käfigstäben (150) mittels einer Schweißverbindung (128) in einem zweiten Schritt (320);
Aufsetzen einer Kurzschlussscheibe (130A, 130B) auf die Verbindungsscheibe (120A, 120B) in einem dritten Schritt (330);
Verbinden der Kurzschlussscheibe (130A, 130B) mit der Verbindungsscheibe (120A, 120B) mittels einer Lötverbindung (138) in einem vierten Schritt (340).

8. Verfahren (300) nach Anspruch 7,
wobei die Ausnehmungen (122) im ersten Schritt (310) durch Stanzen angefertigt werden.

9. Verfahren (300) nach einem der Ansprüche 7 oder 8,
wobei im dritten Schritt (330) die Kurzschlussscheibe (130A, 130B) so auf die Verbindungsscheibe (120A, 120B) aufgesetzt wird, dass die Verbindungsscheibe in einer axialen Richtung (105) des Kurzschlusskäfigs (100) vollständig überlappt wird.

10. Verfahren (300) nach Anspruch 9,
wobei die stoffschlüssige Verbindung (138) zwischen der Kurzschlussscheibe (130A, 130B) und der Verbindungsscheibe (120A, 120B) mittels einer Lötfolie (160) hergestellt wird, die zwischen der Kurzschlussscheibe (130A, 130B) und der Verbindungsscheibe (120A, 120B) angeordnet wird.

## Claims

1. Squirrel cage (100) for a squirrel cage rotor, the squirrel cage having:
a plurality of cage bars (150) which run in the axial direction (105) of the squirrel cage;
a first short-circuiting ring (110A) and a second short-circuiting ring (110B);
wherein the first short-circuiting ring (110A) and the second short-circuiting ring (110B) are arranged at ends (152A, 152B) of the plurality of cage bars (150), which ends are situated opposite one another in the axial direction; wherein
at least one of the first short-circuiting ring (110A) and the second short-circuiting ring (110B) has a connecting disc (120A, 120B) and a short-circuiting disc (130A, 130B);
wherein the connecting disc (120A, 120B) has a plurality of recesses (122) in each of which a cage bar (150) is arranged, so that the plurality of cage bars are mechanically fixed with respect to the connecting disc (120A, 120B); and
wherein the short-circuiting disc (130A, 130B) bears directly against the connecting disc (120A, 120B) in the axial direction (105),
**characterized in that**
the cohesive connection (128) between the cage bars (150) and the connecting disc (120A, 120B) is established by means of a weld connection, and **in that** the cohesive connection (138) between the connecting disc (120A, 120B) and the short-circuiting disc (130A, 130B) is established by means of a solder connection.

2. Squirrel cage (100) according to Claim 1,
wherein the recesses (122) are apertures in the axial direction (150) of the connecting disc; and
wherein the short-circuiting disc (130A, 130B) bears against the connecting disc such that the short-circuiting disc (130A, 130B) overlaps the recesses (122).

3. Squirrel cage according to either of Claims 1 and 2,
wherein the cage bars (150) are cohesively connected to the connecting disc (120A, 120B).

4. Squirrel cage according to one of the preceding claims,
wherein the short-circuiting disc (130A, 130B) is cohesively connected to the connecting disc (120A, 120B).

5. Squirrel cage according to one of the preceding claims,
wherein at least one element of the short-circuiting disc (130A, 130B) and of the connecting disc (120A, 120B) contains aluminium or copper or an alloy thereof.

6. Squirrel cage according to one of the preceding claims,
wherein the short-circuiting disc (130A, 130B) and the connecting disc (120A, 120B) have the same material composition.

7. Method (300) for producing a squirrel cage (100) for a squirrel cage rotor, the method comprising the following steps:
making a plurality of recesses (122) in a connecting disc (120A, 120B) in a first step (310);
fitting the connecting disc (120A, 120B) to the squirrel cage (100), so that in each case one cage bar (150) of a plurality of cage bars (150) is arranged in one recess (122) of the plurality of recesses (122), and connecting the connecting disc (120A, 120B) to the plurality of cage bars (150) by means of a weld connection (128) in a second step (320);
mounting a short-circuiting disc (130A, 130B) onto the connecting disc (120A, 120B) in a third step (330); and
connecting the short-circuiting disc (130A, 130B) to the connecting disc (120A, 120B) by means of a solder connection (138) in a fourth step (340).

8. Method (300) according to Claim 7,
wherein the recesses (122) are made in the first step (310) by punching.

9. Method (300) according to either of Claims 7 and 8,
wherein, in the third step (330), the short-circuiting disc (130A, 130B) is mounted onto the connecting disc (120A, 120B) such that the connecting disc is completely overlapped in an axial direction (105) of the squirrel cage (100).

10. Method (300) according to Claim 9,
wherein the cohesive connection (138) between the short-circuiting disc (130A, 130B) and the connecting disc (120A, 120B) is established by means of a soldering foil (160) which is arranged between the short-circuiting disc (130A, 130B) and the connecting disc (120A, 120B).

## Revendications

1. Cage en court-circuit (100) pour un moteur à rotor en court-circuit, la cage en court-circuit comprenant:
une multiplicité de barres de cage (150), qui s'étendent dans la direction axiale (105) de la cage en court-circuit ;
une première bague de court-circuit (110A) et une seconde bague de court-circuit (110B);
dans laquelle la première bague de court-circuit (110A) et la seconde bague de court-circuit (110B) sont disposées sur des extrémités opposées en direction axiale (152A, 152B) de la multiplicité de barres de cage (150); dans laquelle
au moins une de la première bague de court-circuit (110A) et de la seconde bague de court-circuit (110B) présente un disque d'assemblage (120A, 120B) et un disque de court-circuit (130A, 130B);
dans laquelle le disque d'assemblage (120A, 120B) présente une multiplicité de découpes (122), dans lesquelles est respectivement disposée une barre de cage (150), de telle manière que la multiplicité de barres de cage soient fixées mécaniquement par rapport au disque d'assemblage (120A, 120B); et
dans laquelle le disque de court-circuit (130A, 130B) s'applique en direction axiale (105) directement sur le disque d'assemblage (120A, 120B),
**caractérisée en ce que** la liaison matérielle (128) entre les barres de cage (150) et le disque d'assemblage (120A, 120B) est réalisée par un assemblage soudé et **en ce que** la liaison matérielle (138) entre le disque d'assemblage (120A, 120B) et le disque de court-circuit (130A, 130B) est réalisée par un assemblage brasé.

2. Cage en court-circuit (100) selon la revendication 1,
dans laquelle les découpes (122) sont des traversées en direction axiale (105) du disque d'assemblage; et
dans laquelle le disque de court-circuit (130A, 130B) s'applique sur le disque d'assemblage, de telle manière que le disque de court-circuit (130A, 130B) recouvre les découpes (122).

3. Cage en court-circuit selon une des revendications 1 ou 2, dans laquelle les barres de cage (150) sont assemblées matériellement au disque d'assemblage (120A, 120B).

4. Cage en court-circuit selon l'une quelconque des revendications précédentes, dans laquelle le disque de court-circuit (130A, 130B) est assemblé matériellement au disque d'assemblage (120A, 120B).

5. Cage en court-circuit selon l'une quelconque des revendications précédentes, dans laquelle au moins un élément du disque de court-circuit (130A, 130B) et du disque d'assemblage (120A, 120B) présente de l'aluminium ou du cuivre ou un alliage de ceux-ci.

6. Cage en court-circuit selon l'une quelconque des revendications précédentes, dans laquelle le disque de court-circuit (130A, 130B) et le disque d'assemblage (120A, 120B) présentent la même composition matérielle.

7. Procédé (300) de production d'une cage en court-circuit (100) pour un moteur à rotor en court-circuit, le procédé présentant les étapes suivantes:
pratiquer une multiplicité de découpes (122) dans un disque d'assemblage (120A, 120B) dans une première étape (310) ;
installer le disque d'assemblage (120A, 120B) sur la cage en court-circuit (100), de telle manière qu'une barre de cage (150) d'une multiplicité de barres de cage (150) soit respectivement disposée dans une découpe (122) de la multiplicité de découpes (122) et assembler le disque d'assemblage (120A, 120B) à la multiplicité de barres de cage (150) au moyen d'un assemblage soudé (128) dans une deuxième étape (320);
poser un disque de court-circuit (130A, 130B) sur le disque d'assemblage (120A, 120B) dans une troisième étape (330) ;
assembler le disque de court-circuit (130A, 130B) au disque d'assemblage (120A, 120B) au moyen d'un assemblage brasé (138) dans une quatrième étape (340).

8. Procédé (300) selon la revendication 7, dans lequel on pratique les découpes (122) dans la première étape (310) par estampage.

9. Procédé (300) selon une des revendications 7 ou 8, dans lequel on pose dans la troisième étape (330) le disque de court-circuit (130A, 130B) sur le disque d'assemblage (120A, 120B) de telle manière que le disque d'assemblage soit entièrement recouvert dans une direction axiale (105) de la cage en court-circuit (100).

10. Procédé (300) selon la revendication 9, dans lequel on réalise l'assemblage matériel (138) entre le disque de court-circuit (130A, 130B) et le disque d'assemblage (120A, 120B) au moyen d'une feuille de brasage (160), qui est disposée entre le disque de court-circuit (130A, 130B) et le disque d'assemblage (120A, 120B).
